# EUROPÄISCHE PATENTANMELDUNG

(11) **EP 1 117 143 A2**
(43) Veröffentlichungstag der Anmeldung: **18.07.2001**
(21) Anmeldenummer: 00113046.7
(22) Anmeldetag: 23.06.2000
(51) Int. Cl.: H01M 6/44, H01M 10/04, H01M 2/10

(54) **Gleichstromspeicher in Rundzellenform**

(30) Priorität: 17.01.2000 DE 10031463
(71) Anmelder: Bech, David, 73099 Adelberg (DE)
(72) Erfinder: Bech, David, 73099 Adelberg (DE)
(74) Vertreter: Wilhelm & Dauster Patentanwälte European Patent Attorneys

(57) **Zusammenfassung**

Bei einem Gleichstromspeicher in Rundzellenform mit der genormten Größe C oder D werden in einem Gehäuse (21, 22) mit den Außenabmessungen von Rundzellen der Größe C oder D bis zu vier Rundzellen (10) der Größe AAA oder AA angeordnet, die mittels Kontaktelementen (12, 14) miteinander verschaltet sind, die als Pluspol und als Minuspol jeweils aus einem Stirnende des Gehäuses ragen.

## Beschreibung

Die Erfindung betrifft einen Gleichstromspeicher in Rundzellenform mit der genormten Größe C oder D.

Derartige Gleichstromspeicher können Primärelemente oder Sekundärelemente sein, beispielsweise alkalische Braunstein/Zink-Batterien. Die genormten Größen C und D werden auch mit der Bezeichnung R14 und der Bezeichnung R20 nach IEC bezeichnet.

Der Erfindung liegt die Aufgabe zugrunde, die Gebrauchseigenschaften derartiger Gleichstromspeicher zu verbessern.

Diese Aufgabe wird dadurch gelöst, dass in einem Gehäuse mit den Außenabmessungen von Rundzellen C oder D, das aus wenigstens zwei Teilen zusammengefügt ist, die eine wenigstens annähernd zylindrische Außenkontur und zwei Stirnwände bilden, bis zu vier Rundzellen der Größe AAA oder AA angeordnet sind, die mittels Kontaktelementen miteinander verschaltet sind, die als Pluspol und Minuspol jeweils aus einer Stirnwand des Gehäuses ragen.

Das Zusammenschalten von vier kleineren Rundzellen der Größe AAA oder AA, die auch nach IEC als R03 oder als R6 bezeichnet werden, führt zu verbesserten elektrischen Eigenschaften im Vergleich zu einer Rundzelle der Größe C oder D. Diese verbesserten elektrischen Eigenschaften sind insbesondere dann von Vorteil, wenn die Gleichstromspeicher mit einem Werkzeug oder einem Gerät verwendet werden, von welchem eine erhöhte Leistung oder eine erhöhte Kapazität gefordert wird.

In Ausgestaltung der Erfindung wird vorgesehen, dass die Gehäusewände innen an den Durchmesser der vier Rundzellen angepasste, teilzylindrische Flächen und außen dem Durchmesser von Rundzellen der Größe C oder D entsprechende, zylindrische Flächen aufweisen. Damit wird erreicht, dass die vier kleinen, zusammengeschalteten Rundzellen sicher geführt sind.

In weiterer Ausgestaltung der Erfindung wird vorgesehen, dass die Gehäusewände insbesondere für die Größe D auf sich in Längsrichtung erstreckende Stege und Stirnwände reduziert sind. Dies ist insbesondere bei erfindungsgemäßen Gleichstromspeicher der Größe D zweckmäßig, um innerhalb der vorgeschriebenen maximalen Abmessungen insbesondere bezüglich des Durchmessers bleiben zu können. Vorteilhaft wird dabei weiter vorgesehen, dass die Gehäusewände mit einer folienartigen Umhüllung versehen sind. Eine derartige folienartige Umhüllung wird in der Regel ohnehin angebracht werden, um dem Namen des Herstellers oder sonstige Beschriftungen anzubringen. Nach Anbringen der folienartigen Umhüllung wirkt das Gehäuse, auch wenn seine Seitenwände im wesentlichen nur aus den Stegen bestehen, als ein einheitliches, geschlossenes Gehäuse.

In weiterer Ausgestaltung der Erfindung wird vorgesehen, dass die Kontaktelemente, die die vier Rundzellen verschalten, Blechformteile sind, die jeweils mittig eine als Pluspol oder eine als Minuspol dienende Ausprägung aufweisen. Um eine sichere Kontaktierung zu gewährleisten wird vorgesehen, dass die Blechformteile mit den Kontakten der Rundzellen zugeordneten Zungen versehen sind, die mittels Punktschweißen an den Kontakten der vier Rundzellen befestigt sind.

Um den Pluspol und den Minuspol auch in gewissem Umfang mit Druckkräften belasten zu können, wird in weiterer Ausgestaltung der Erfindung vorgesehen, dass die Kontaktelemente gegen ein Eindrücken nach Innen in das Gehäuse hinein abgestützt sind. Bei einer vorteilhaften Ausführungsform wird dabei vorgesehen, dass die Kontaktelemente mittels eines im Innern des Gehäuses angeordneten Distanzstückes gegeneinander abgestützt sind.

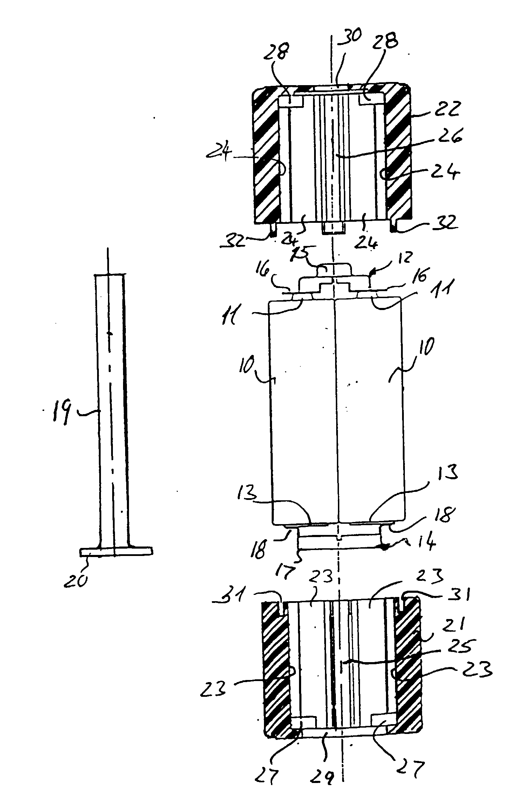

Weitere Merkmale und Vorteile der Erfindung ergeben sich aus den Unteransprüchen und der nachfolgenden Beschreibung der in der Zeichnung dargestellten Ausführungsform.

Die Zeichnung zeigt in der Art einer Explosionsdarstellung einen erfindungsgemäßen Gleichstromspeicher, wobei das zweiteilige Gehäuse in axialer Richtung geschnitten ist.

Bei dem Ausführungsbeispiel sind vier Rundzellen 10 der Größe AA oder AAA zu einem Bündel zusammengefasst, bei welchem die mit ihren Längsachsen in den Ecken eines Quadrates befindlichen Rundzellen jeweils entlang von Mantellinien an zwei benachbarten Rundzellen 10 anliegen. Die Rundzellen 10 sind bei dem Ausführungsbeispiel parallel geschaltet. Ihre Pluspole 11 sind mittels eines gemeinsamen Kontaktelementes 12 miteinander verbunden. Die Minuspole 13 sind ebenfalls durch ein gemeinsames Kontaktelement 14 miteinander verbunden. Die Kontaktelemente 12 und 14 sind Blechformteile aus einem gut elektrisch leitenden Metall. Das Kontaktelement 12 besitzt eine abgestufte Ausprägung, deren mittlerer Teil 15 den kontaktierbaren Pluspol bildet. An den Bereich der Ausprägung schließen sich Federzungen 16 an, die mittels eines radialen Schlitzes in zwei Teile unterteilt sind. Beide Teile dieser Federzungen 16 sind jeweils mittels eines Schweißpunktes mit dem Plus-Kontakt 11 einer Rundzelle 10 verbunden. Die mittlere Ausprägung 12 des Kontaktelementes besitzt den Durchmesser, wie er als Mindest- und Maximaldurchmesser für den Plus-Kontakt einer Rundzelle C oder D vorgeschrieben ist.

Das Kontaktelement 14 ist ähnlich gestaltet, d.h. es besitzt eine mittlere Ausprägung 17, die eine zylindrische Außenkontur entsprechend den Abmessungen des für den Minus-Pol einer Rundzelle der Größe C oder D vorgeschriebenen Mindestdurchmessers. Von dieser Ausprägung ragen vier abgewinkelte Kontaktzungen 18 ab, die ebenfalls mittels radialen Schlitzen unterteilt sind und die jeweils mittels eines Schweißpunktes an den Minuspol 13 einer Rundzelle 10 angeschweißt sind. Die Kontaktelemente 12 und 14 sind so gestaltet, dass ihre Endflächen einen Abstand aufweisen, der der vorgeschriebenen Länge einer Rundzelle C oder D entspricht, d.h. dem axialen Abstand zwischen dem Pluspol und dem Minuspol einer derartigen Rundzelle C oder D.

Innen zwischen die Rundzellen 10 ist vor dem Anbringen der Kontaktelemente 12, 14 ein Distanzstück 19 eingesetzt, dessen axiale Länge der vorgeschriebenen axialen Länge einer Rundzelle C oder D entspricht, wobei jeweils die Materialstärke der Kontaktelemente 12, 14 abgezogen ist. Dieses Distanzstück 19, das mit einem verbreiterten Fuß 20 dem Kontaktelement 14 zugeordnet ist, sorgt dafür, dass die beiden Kontaktelemente in axialer Richtung einer ausweichenden Druckbelastung ausgesetzt werden können, ohne dass sie nachgeben.

Die Baugruppe aus den vier Rundzellen 10, den Kontaktelementen 12, 14 und den dazwischen angeordneten Distanzstück 19 ist in einem aus zwei Teilen 21, 22 zusammengefügten Gehäuse untergebracht, das die Außenabmessung einer Rundzelle der Größe C oder D aufweist. Das aus den beiden Teilen 21, 22 gebildete Gehäuse hüllt die Rundzellen 10 ein. Die Gehäusewände der beiden Teile 21, 22 sind innen mit teilzylindrischen Flächen 23, 24 versehen, die der Außenkontur der Rundzellen 10 angepaßt sind. Dadurch sind in etwa keilförmig gestaltete Bereiche 25, 26 vorhanden, die zwischen die Rundzellen 10 hineinragen. Die Spitzen dieser keilförmigen Bereiche sind abgeflacht.

Die Teile 21, 22 des Gehäuses fassen die Rundzellen 10 auch in axialer Richtung ein. Sie sind mit im Bereich der keilförmigen Bereiche unterbrochenen Ringbunden 27, 28 versehen, die sich an die Stirnenden der Rundzellen 10 neben den Kontaktzungen 16, 18 anlegen. Die Stirnwände der Teile 21, 22 des Gehäuses sind mit Aussparungen 29, 30 versehen, die den Ausprägungen 17, 15 entsprechen, die den Minuspol und den Pluspol des Rundzellenbündels bilden. Die Ausprägungen 17, 15 ragen durch die Aussparungen 29, 30 hindurch.

Die einander gegenüberliegenden Ränder der Gehäusewände der Teile 21, 22 sind mit Zentriermitteln versehen, die ineinander greifen. Hierzu sind in den Teil 21 Aussparungen 31 vorgesehen, die in die Laschen 32 des Teils 22 eingreifen. Die beiden Teile 21, 22, die vorzugsweise aus Kunststoff bestehen, werden durch Kleben oder Schweißen o.dgl. miteinander verbunden. Die Teile 21, 22 des Gehäuses können auch aus Metall hergestellt sein, wobei dann für eine Isolierung zu den Kontaktelementen 12, 14 Sorge getragen werden muß.

In einem Gehäuse mit den Abmessungen einer Rundzelle C lassen sich vier Rundzellen der Größe AAA unterbringen. In einem Gehäuse 21, 22 mit den Abmessungen einer Rundzelle D lassen sich problemlos bis zu vier Rundzellen der Größe AAA unterbringen. Auch eine Unterbringung von bis zu vier Rundzellen 10 der Größe AA ist in einem Gehäuse 21, 22 mit den Außenabmessungen einer Rundzelle D möglich. Hierzu ist es zweckmäßig, wenn die Gehäusewandungen der Teile 21, 22 bis auf sich in Längsrichtung erstreckende Stege reduziert werden, so dass dieses Gehäuse 21, 22 die Rundzellen des Typs AA nur käfigartig umgibt, d.h. unter Belassung von sich in axialer Richtung erstreckenden Aussparungen. In der Regel wird eine Folie außen auf dem zusammengefügten Gehäuse 21, 22 angebracht, um Beschriftungen anzubringen. Diese Folie verschließt dann die Aussparungen, so dass der Eindruck eines geschlossenen Gehäuses erhalten bleibt.

Selbstverständlich ist es möglich, in einem derartigen Gehäuse 21, 22 auch weniger als vier Rundzellen 10 unterzubringen, d.h. drei oder zwei Rundzellen 10. Die zweckmäßigste Ausnutzung wird jedoch dann erhalten, wenn vier Rundzellen 10 aufgenommen werden.

In den meisten Fällen wird vorgesehen werden, dass vier Rundzellen 10 verwendet werden, die parallel zueinander geschaltet sind. Dadurch ist es möglich, einen Gleichstromspeicher mit hoher Kapazität zu schaffen. Es ist jedoch auch möglich, für besondere Anwendungsfälle die Rundzellen 10 hintereinander zu schalten. Hierzu werden dann abweichend gestaltete Kontaktelemente vorgesehen, die aber dann in ähnlicher Weise aus dem Gehäuse 21, 22 als Pluspol und als Minuspol herausragen.

## Patentansprüche

1. Gleichstromspeicher in Rundzellenform mit der genormten Größe C oder D, dadurch gekennzeichnet, dass in einem Gehäuse mit den Außenabmessungen von Rundzellen der Größe C oder D, das aus wenigstens zwei Teilen (21, 22) zusammengefügt ist, die wenigstens annähernd eine zylindrische Außenkontur und zwei Stirnwände bilden, bis zu vier Rundzellen (10) der Größe AAA oder AA angeordnet sind, die mittels Kontaktelementen (12, 14) miteinander verschaltet sind, die als Pluspol und Minuspol jeweils aus einer Stirnwand des Gehäuses ragen.

2. Gleichstromspeicher nach Anspruch 1, dadurch gekennzeichnet, dass die Gehäusewände innen an den Durchmesser der Rundzellen (10) angepasste teilzylindrische Flächen (23, 24) und außen dem Durchmesser von Rundzellen der Größe C oder D entsprechende, zylindrische Flächen aufweisen.

3. Gleichstromspeicher nach Anspruch 2, dadurch gekennzeichnet, dass die Gehäusewände insbesondere für die Größe D auf sich in Längsrichtung erstreckende Stege und Stirnwände reduziert sind.

4. Gleichstromspeicher nach einem der Ansprüche 1 bis 3, dadurch gekennzeichnet, dass die Wände des Gehäuses (21, 22) mit einer folienartigen Umhüllung versehen sind.

5. Gleichstromspeicher nach einem der Ansprüche 1 bis 4, dadurch gekennzeichnet, dass das Gehäuse aus zwei im Bereich der Gehäusewände zusammenfügbaren Teilen (21, 22) gebildet ist.

6. Gleichstromspeicher nach Anspruch 5, dadurch gekennzeichnet, dass die einander zugewandten Enden der Gehäusewände mit ineinandergreifenden Zentrierelementen (31, 32) versehen sind.

7. Gleichstromspeicher nach einem der Ansprüche 1 bis 6, dadurch gekennzeichnet, dass die Kontaktelemente (12, 14) Blechformteile sind, die jeweils mittig eine als Pluspol oder als Minuspol dienende Ausprägung (15, 17) aufweisen.

8. Gleichstromspeicher nach Anspruch 7, dadurch gekennzeichnet, dass die Blechformteile mit den Kontakten (11, 13) der Rundzellen (10) zugeordneten Zungen (16, 18) versehen sind.

9. Gleichstromspeicher nach Anspruch 8, dadurch gekennzeichnet, dass die Zungen (16, 18) der Blechformteile (12, 14) mittels Punktschweißen an den Kontakten (11, 13) der Rundzellen (10) befestigt sind.

10. Gleichstromspeicher nach einem der Ansprüche 1 bis 9, dadurch gekennzeichnet, dass die Stirnwände des Gehäuses (21, 22) mit dem Pluspol und/oder dem Minuspol der Kontaktelemente (12, 14) einfassenden Aussparungen (29, 30) versehen sind.

11. Gleichstromspeicher nach einem der Ansprüche 1 bis 10, dadurch gekennzeichnet, dass die Kontaktelemente (12, 14) gegen Eindrücke nach innen in das Gehäuse (21, 22) hinein abgestützt sind.

12. Gleichstromspeicher nach Anspruch 11, dadurch gekennzeichnet, dass die Kontaktelemente (12, 14) mittels eines im Innern des Gehäuses (21, 22) angeordneten Distanzstückes (19) gegeneinander abgestützt sind.

13. Gleichstromspeicher nach einem der Ansprüche 1 bis 12, dadurch gekennzeichnet, dass die Rundzellen (10) parallel geschaltet sind.

14. Gleichstromspeicher nach einem der Ansprüche 1 bis 12, dadurch gekennzeichnet, dass die Rundzellen (10) in Reihe hintereinander geschaltet sind.
